**Europäisches Patentamt**

**European Patent Office**

**Office européen des brevets**

(11) Veröffentlichungsnummer : **0 392 401 B1**

(12) # EUROPÄISCHE PATENTSCHRIFT

(45) Veröffentlichungstag der Patentschrift :
**11.11.92 Patentblatt 92/46**

(51) Int. Cl.⁵ : **F02C 7/042,** F02K 7/16,
F02K 3/075

(21) Anmeldenummer : **90106710.8**

(22) Anmeldetag : **07.04.90**

(54) **Absperreinrichtung für Gebläse, insbesondere Gebläse-Staustrahltriebwerke.**

(30) Priorität : **10.04.89 DE 3911715**

(43) Veröffentlichungstag der Anmeldung :
**17.10.90 Patentblatt 90/42**

(45) Bekanntmachung des Hinweises auf die
Patenterteilung :
**11.11.92 Patentblatt 92/46**

(84) Benannte Vertragsstaaten :
**BE CH DE FR GB IT LI**

(56) Entgegenhaltungen :
**DE-B- 1 289 364**

(56) Entgegenhaltungen :
FR-A- 2 399 547
GB-A- 926 947
GB-A- 2 005 356
GB-A- 2 047 815
GB-A- 2 205 360
US-A- 2 828 603
US-A- 3 672 788

(73) Patentinhaber : **MTU MOTOREN- UND
TURBINEN-UNION MÜNCHEN GMBH
Dachauer Strasse 665 Postfach 50 06 40
W-8000 München 50 (DE)**

(72) Erfinder : **Wildner, Walter
Lierstrasse 29
W-8000 München 19 (DE)**

EP 0 392 401 B1

## Beschreibung

Die Erfindung bezieht sich auf eine Einrichtung nach dem Oberbegriff des Patentanspruchs 1.

In jüngster Zeit gewinnen kombinierte Turbinen-Staustrahltriebwerke wieder an Bedeutung, und zwar im Rahmen sogenannter "Überschallflugkonzepte" mit äußerst hohem Einsatzspektrum vom Start bis zur hohen Überschallgeschwindigkeit in großen Flughöhen (bis etwa 30 km Höhe). Die Hyperschallflugkonzepte schließen dabei unter anderem ein Weltraum-Fluggeräte-Konzept ein (Projekt Sänger), welches auf ein Zwei-Stufen-Konzept, wie folgt, hinausläuft. Die erste Stufe soll von einem nur innerhalb der Atmosphäre operierenden Fluggerät durchgeführt werden, während die zweite Stufe auf einem "huckepackartig" vom genannten Fluggerät mitgenommenen Nutzlastfluggerät basiert, daß zwecks Weltraummissionen im oberen Bereich der Atmosphäre im Wege eines geeigneten Raketenantriebssystems die ihm zugewiesene Flugbahn eigenständig fortsetzen soll. Das für die erste Stufe zuständige Fluggerät ist demnach also rückkehrbar und wiederverwendbar und vollzieht Starts und Landungen wie ein herkömmliches Flugzeug.

Bei z. B. für ein derartiges Fluggerät einzusetzenden kombinierten Turbinen-Staustrahl-Triebwerken soll im allgemeinen etwa bei Erreichung einer Fluggeschwindigkeit von etwa Mach 3 das Turbinenstrahltriebwerk kontinuierlich ab- und der betreffende Staustrahlantrieb kontinuierlich eingeschaltet werden, um allein mit letzterem gewünschte hohe Überschall- bzw. Hyperschallgeschwindigkeiten bis zu Mach 4,5 oder gar darüber zu erreichen. Fluggeschwindigkeiten von etwa Mach 2 oder gar darüber können dabei im kombinierten Betrieb "Strahltriebwerk mit eingeschaltetem Nachbrenner" erreicht werden; der hierfür vorteilhaft dem Strahltriebwerksteil nachgeschaltete und gegebenenfalls in der Kombination aus Verdichter- bzw. Gebläseluft und Triebwerksabgas beaufschlagte Nachbrenner kann durch Zuschaltung weiterer Brennstoffeinspritzmittel nebst Flammstabilisatoren das Antriebssystem für den Staustrahlbetrieb ausbilden unter entsprechend bemessener ausschließlicher Umgebungsluftversorgung bei abgeschaltetem Turbinenstrahltriebwerksteil.

Für die genannten Einsatzzwecke wurde bereits ein kombiniertes Gebläse-Staustrahltriebwerk vorgeschlagen, mit von einem den Gaserzeuger enthaltenden Grundtriebwerk angetriebenem Frontgebläse, das in einen das Grundtriebwerk ummantelnden Sekundärkanal fördert und damit den Hauptvortriebsschub im Unterschallbetrieb liefert. Bei entsprechend angepaßter Einlauf- und Schubdüsengeometrie soll beim betreffenden Triebwerk im Hyperschallbetrieb das Grundtriebwerk nebst Gebläse abgeschaltet bzw. stillgesetzt sein, wobei der äußere Sekundärkanal dann mit der erforderlichen Staudruckluft beaufschlagt ist, die stromab des Grundtriebwerksendes der Zusatzbrennkammer für den Staustrahlbetrieb zugeführt werden soll.

Dabei kommt der oder den erforderlichen Absperreinrichtungen des Grundtriebwerteils eine ganz besondere Bedeutung zu. In der Absperroder Verriegelungsstellung des Grundtriebwerks bei Staustrahlbetrieb soll das Grundtriebwerk so wenig wie möglich von den vergleichsweise hohen Temperaturen der Staudruckluft (etwa 1.700 °C) beeinträchtigt werden; dies gilt auch für die Absperreinrichtungen selbst, die dementsprechend robust und betriebssicher ausgeführt sein müssen; die zugleich aber auch gewährleisten müssen, daß z. B. im Unterschallbetrieb eine einwandfreie Freigabe der Luftzufuhr vom Gebläse in den äußeren Triebwerkskreis (Sekundärkanal) und in den inneren Triebwerkskreis (Grundtriebwerk) in entsprechend bemessenen Mengenanteilen möglich ist.

Es ist vorgeschlagen worden, bei sogenannten "Wandeltriebwerkskonzepten" mit variabler Leistungsaufteilung, zentral angeordnete sowie axial verfahrbare Ringschieber oder aber auch Schwenkklappen einzusetzen, um z. B. einen vorgegebenen Innenwandkanaldurchbruch sowie einen z. B. ringförmigen Zuströmkanal zum Grundtriebwerk am Sekundärkanal - stromab des Gebläses - wahlweise absperren oder freilegen zu sollen. Siehe hierzu GB-A-2 205 360 und DE-B-1 289 364. Das Ringschieberkonzept hätte unter anderem Nachteile hinsichtlich verhältnismäßig großer axialer Verstellwege sowie hinsichtlich eines verhältnismäßig großen Einbauvolumens, das aus konstruktiv vorgegebenen Gründen vielfach nicht zur Verfügung steht; ein verhältnismäßig großes Schiebervolumen würde wiederum ein vergleichsweise hohes Schiebergewicht nach sich ziehen. Das Klappenkonzept würde dabei Nachteile, unter anderem hinsichtlich einer verhältnismäßig komplizierten, störanfälligen und weit räumlich ausladenden Bauweise, auch bezüglich des Verstellmechanismus nach sich ziehen. Dabei müßten die Klappen, wie bei Schübdüsen ähnlich, in allen Stellungen - als rotationssymmetrisch dichter Verbund - in- bzw. übereinandergreifen. Örtlich unbedingtes Abdichterfordernis und schon genannte Temperaturbeherrschung würden ferner nicht unerhebliche technische Realisierungsprobleme aufwerfen. Die dabei ferner einen vergleichsweise großen Störanfälligkeitsgrad nach sich ziehende Bauteilvielfalt würde wiederum eine vergleichsweise hohe Fremdkörperbeschädigungsgefahr des Grundtriebwerks, insbesondere des Hochdruckverdichters, nicht ausschließen lassen können.

Neben dem Nachteil eines vergleichsweise hohen Gewichts dürfte ein weiterer wesentlicher Nachteil beider Konzepte (Ringschieber bzw. Klappen) darin zu sehen sein, daß jeweils eine absperrende Verstellung in verhältnismäßig großflächiger Weise gegen eine vorhandene Gasströmung erfolgen müßte, so daß neben einer kraftbeherrschenden, gewichtlich schweren Bauweise auch vergleichsweise hohe Antriebskräfte für die Verstellung aufzubringen wären.

Der Erfindung liegt die Aufgabe zugrunde, eine Absperreinrichtung der Eingangs angegebenen Art (Oberbegriff des Patentanspruchs 1) anzugeben, mit der bei betriebssicherem und verhältnismäßig einfachem, gewichtlich leichtem Aufbau ein großflächiger ringförmiger Zuströmquerschnitt mit Rücksicht auf verhältnismäßig geringe zur Verfügung stehende Einbauvolumina im Triebwerk absperrbar oder freilegbar ist.

Die gestellte Aufgabe ist mit den im Kennzeichnungsteil des Patentanspruchs 1 enthaltenen Merkmalen erfindungsgemäß gelöst.

Unter Ausnutzung eines vielfach vorhandenen Zwischengehäuseabschnittes als Strömungsteiler können beide Ringe bei geringer Einbaulängenbeanspruchung sicher übereinander verstaut werden. Zum Absperren des Zuströmquerschnittes sind also die Ringe mit verhältnismäßig geringem aerodynamischen Widerstand in einen örtlich aufgeteilten Verlauf der vorhandenen Druckluftströmung axial verfahrbar, was zu einer gewichtlich leichten Auslegbarkeit der Ringe sowie zu einem verhältnismäßig geringen Verstellkrafterfordernis führt.

Vorteilhaft kann ferner eine triebwerksdezentrale Antriebs- und Verstellmittelanordnung vorgesehen werden, unter Ausnutzung im allgemeinen triebwerkseitig zur Verfügung stehender ringförmiger Einbauvolumina, zwischen dem Sekundär- und dem Primärkreis (Sekundärkanal/Grundtriebwerk).

Die Erfindung bietet also zum Beispiel den Vorteil, daß eine Absperr- bzw. Verschließeinrichtung für den Hochdruckverdichter des Grundtriebwerks ohne unnötige axiale Verlängerung des Triebwerks erreicht werden kann. Die Erfindung kann also bei äußerst beengten zur Verfügung stehenden Raumverhältnissen im Triebwerk vorteilhaft eingesetzt werden.

Die erforderliche Verschiebung der Ringe kann über mehrere Betätigungsgestänge durchgeführt werden, die am hinteren Ende an einer Kugelrollspindel angeschlossen sind. Die Muttern aller Kugelrollspindeln sitzen dabei in Getrieben, die durch eine über den ganzen Umfang vorhandene flexible Welle verbunden sind und an einer Stelle angetrieben werden. Der Antrieb kann pneumatisch, hydraulisch oder elektromotorisch geschehen.

Da die Verschließringe in der gleichen Zeit unterschiedlich weit ausgefahren werden müssen, sind die Kugelrollspindeln für den betreffenden inneren und äußeren Ring mit verschiedenen Steigungen versehen.

Erfindungsgemäß besteht ferner die Möglichkeit, nur denjenigen Ring mit dem längsten Verstellweg anzutreiben und den betreffenden anderen Ring mitzuschleppen. Hierzu sieht die Erfindung entsprechende Mitnahmeverbindungsmittel vor, die im weitesten Sinne als Nutfederverbindungen umschrieben werden könnten, d. h., es sind am betreffenden einen Ring mit dem größten Verstellweg Stifte oder Mitnehmernasen vorgesehen, die in entsprechend zugeordnete Axialnuten des anderen mitzuschleppenden Ringes eingreifen können.

In Ausgestaltung des Grundgedankens der Erfindung können die betreffenden Betätigungsgestänge bzw. Zug-Druckstangen im Bereich des Durchtritts an der Zwischengehäusewand abdichtend geführt sein, damit auftretende Leckluft nur in den betreffenden inneren Abzweigkanal des Grundtriebwerks gelangen kann.

Die erfindungsgemäße Ringausbildung der Absperreinrichtung ist durch eine geringe Bauteilanzahl gekennzeichnet, so daß eine geringe Störanfälligkeitsgefahr besteht sowie ferner praktisch keine Gefahr besteht, daß Bauteilbrüche oder dergleichen entstehen, die dazu führen könnten, daß Bruchstücke in den Hochdruckverdichter des Grundtriebwerks abfliegen könnten.

Vorteilhafte Ausgestaltungen des Grundgedankens der Erfindung ergeben sich aus den Merkmalen der Patentansprüche 2 bis 19.

Anhand der Zeichnungen ist die Erfindung beispielsweise weiter erläutert; es zeigen:

Fig. 1 die Anordnung der Einrichtung an einem als Mittellängsschnitt dargestellten kombinierten Gebläse-Staustrahltriebwerk, hier allerdings unter Weglassung einer dem Sekundärkreis und dem Grundtriebwerksteil (Primärkreis) nachgeschaltet Nach- und Staustrahlbrennkammer,

Fig. 2 eine erste Ausführungsform der Einrichtung anhand einer teilemäßig gegenüber Fig. 1 vergrößert wiedergegebenen, radial äußeren Triebwerkssektion,

Fig. 3 eine zweite Ausführungsform der Einrichtung anhand einer teilemäßig gegenüber Fig. 1 vergrößert wiedergegebenen, radial äußeren Triebwerkssektion,

Fig. 4 eine dritte, auf wesentlichen Merkmalen der Fig. 2 beruhende Ausführungsform der Einrichtung, hier jedoch in grundsätzlicher weiterer Abwandlung gegenüber Fig. 2 und 3 als "Ringmitschleppvariante" im Rahmen eines gegenüber Fig. 1 wesentlich vergrößerten, radial äußeren Triebwerksteilausschnitts wiedergegeben,

Fig. 5 eine örtliche Gesamtumfangsschnittansicht gemäß A-A der Fig. 2, unter Verdeutlichung von Einzelheiten des Antriebs- und Verstellsystems der beiden Ringe,

Fig. 6 ein der einfacheren Darstellung halber in die Zeichnungsebene projeziertes Stellgetriebe, hier mit einem die Antriebsleistung einführenden und verteilenden Vorsatzgetriebe, zur Verdeutlichung von Einzelheiten gehäuseseitig aufgeschnitten dargestellt und

Fig. 7 eines von mehreren gemäß Fig. 5 gleichförmig über dem Gehäuseumfang verteilt angeordneten Stellgetrieben mit örtlichem Verteilergetriebe auf zwei benachbarte derartige Stellgetriebe, hier ebenfalls in die Zeichnungsebene projeziert und überwiegend gehäuseseitig aufgeschnitten dargestellt.

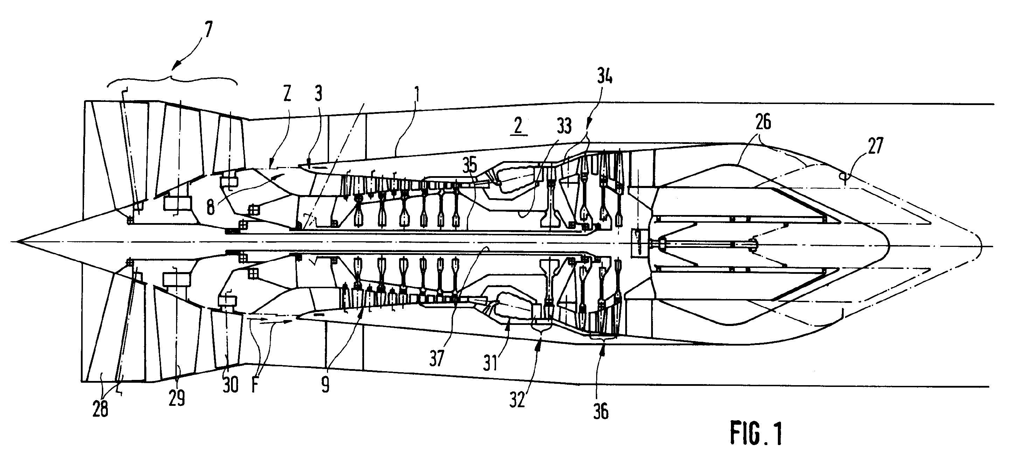

Fig. 1 verkörpert ein beispielsweise für die Durchführung der erfindungsgemäßen Einrichtung bevorzugt geeignetes, kombiniertes Gebläse-Staustrahltriebwerk in Drei-Wellenbauweise. Unter anderem besteht dieses Triebwerk aus einem Frontgebläse 7 mit zwei aufeinanderfolgenden Laufrädern, deren axial durchströmte Laufschaufeln der Reihe nach mit 29 und 30 bezeichnet sind. Mit 28 sind eintrittsseitig angeordnete, kombinierte Stütz-Richt-Schaufeln des Frontgebläses 7 bezeichnet. Das Frontgebläse 7 fördert im Unterschallbetrieb und gegebenenfalls bei eingeschaltetem Nachbrenner (Überschallflugbetrieb) in einen äußeren, das Grundtriebwerk ummantelnden Sekundärkanal 2 und in einen über die später noch näher erläuterte Einrichtung freigelegten Zuströmquerschnitt Z in das Grundtriebwerk. Für den alleinigen Staustrahlbetrieb und hierbei stillgesetztem Grundtriebwerk nebst Frontgebläse 7 soll der zuvor benannte Zuströmquerschnitt Z flächenbündig aerodynamisch optimal abgesperrt sein, so daß vom nicht weiter dargestellten Triebwerkseinlauf aufgefangene und in der Folge weiter hochkomprimierte Staudruckluft über den Sekundärkanal 2 einer geeigneten Zusatzbrennkammer zugeführt werden kann. In nicht weiter dargestellter Weise können Nach- und Zusatzbrennkammer aus Brennstoffeinspritzringen mit nachgeschalteten Flammstabilisatoren ausgebildet sein, die entsprechend dem Flugmissionsbedarf mehr oder weniger über die Einspritzringe mit Brennstoff versorgbar sind; diese Nach- und Zusatzbrennkammer kann aero-thermodynamisch stromab des düsenseitigen Abgasaustritts 27 des Grundtriebwerks innerhalb eines demselben nachgeschalteten Strahlrohrs nebst Zuordnung einer entsprechend variablen Schubdüse angeordnet sein. Gemäß Fig. 1 besteht das Grundtriebwerk ferner aus dem Gaserzeuger, dieser enthält - von links nach rechts gesehen - einen mehrstufigen Axialverdichter 9, eine Ringbrennkammer 31 und eine einstufige Hochdruckturbine 32, die über die gemeinsame trommelartige Welle 33 des Gaserzeugers den Hochdruckverdichter 9 antreibt. Der Hochdruckturbine 32 ist eine axial durchströmte einstufige Mitteldruckturbine 34 aero-thermodynamisch nachgeschaltet, die über eine innere Hohlwelle 35 den Gebläseteil mit der Beschaufelung 30 antreibt. Zum Grundtriebwerk gehört weiter eine zweistufige Niederdruckturbine 36, die über eine durch die Hohlwelle 35 hindurchgeführte weitere Hohlwelle 37 den übrigen Frontteil des Verdichters mit den Laufschaufeln 29 antreibt.

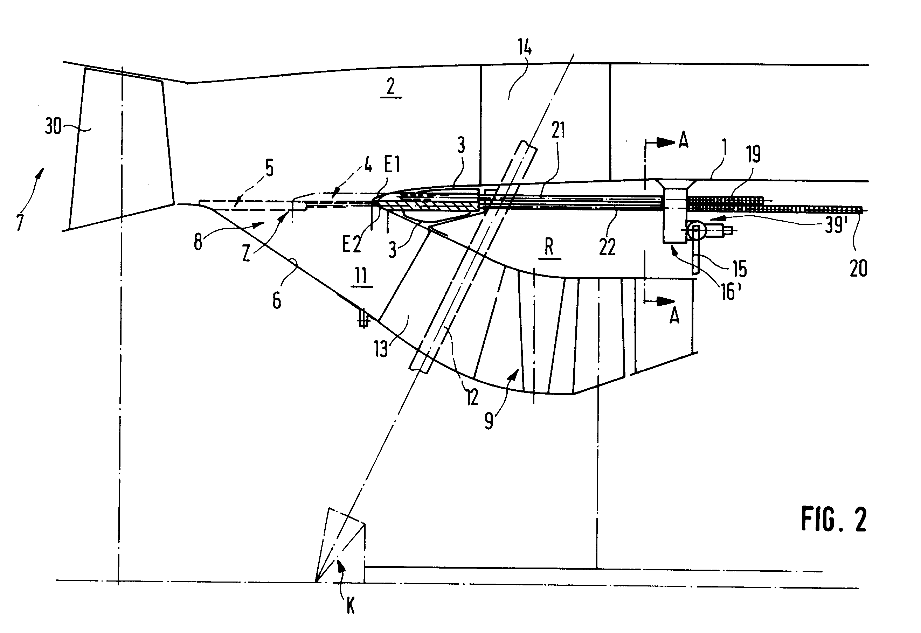

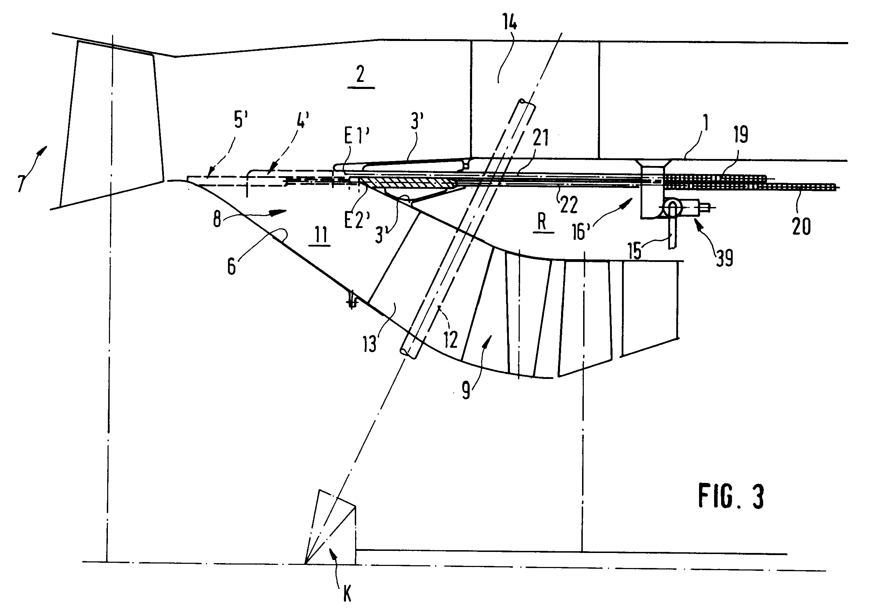

Wie deutlicher aus Fig. 2 und 3 erkennbar, ist die erfindungsgemäße Absperreinrichtung des Zuströmquerschnittes Z hinter dem Frontgebläse 7 bzw. dessen letzten Laufschaufeln 30, an einer Kanalverzweigung 8, zwischen dem Sekundärkanal 2 und dem betreffenden Hochdruckverdichter 9 des Grundtriebwerkes ausgebildet und angeordnet. Dabei befindet sich also zuvorgenannter Zuströmfläche Z, mit anderen Worten an einer unterbrochenen Sektion der Innenwand 1 des äußeren Sekundärkanals 2.

Grundsätzlich besteht also die erfindungsgemäße Absperreinrichtung (Fig. 2) aus zwei in einem als Strömungsteiler ausgebildeten Zwischengehäuse 3 in der Ruhestellung ineinandergeschobenen Ringen 4,5, die zum Absperren der Zuströmfläche Z unter gegenseitiger Flächenkontaktierung unterschiedlich weit aus dem Zwischengehäuse 3 axial ausgefahren sind. Die ausgefahrene Position der beiden Zwischenringe 4,5 ist durch gestrichelte Linienkontur z. B. in Fig. 2 verkörpert. Wie ferner aus Fig. 2 erkennbar, soll in der wirksamen Absperrstellung der jeweils am weitesten axial ausgefahrene innere Ring 5 mit einer abgeschrägten Endfläche gegen eine korrespondierend abgeschrägte äußere Endfläche einer stationären Kanalwand 6 verfahren sein. Auf diese Weise ist ein glattflächiger aerodynamischer Übergang an der betreffenden Absperrstelle vom Sekundärkanal 2 in die Abzweigung 8 gewährleistet. Besonders vorteilhaft ist es gemäß Fig. 2 ferner, daß die Ringe 4,5 in der ineinandergeschobenen Ruhestellung, innerhalb des betreffenden Gehäuseabschnitts 3, mit ihren einen beiden Enden E1, E2 und zusammen mit den daran angrenzenden Flächenabschnitten des Zwischengehäuses 3 eine aerodynamisch optimiert verschlossene Nasenkante des Strömungsteilers ausbilden.

Aus Fig. 2 erkennt man ferner eine Welle 12 (Anlasserwelle) eines Triebwerkgeräteträgers, die unmittelbar hinter dem die Ringe 4,5 enthaltenden Zwischengehäuse 3 angeordnet ist; diese Welle 12 ist dabei schräg, von vorn innen nach hinten außen verlaufend, durch eine Stützschaufel 13 am Hochdruckverdichtereintritt, dann durch einen Abschnitt eines Ringraums R sowie weiter durch eine den Sekundärkanal 2 durchsetzende Stützschaufel 14 hindurchgeführt. Insbesondere auch im Hinblick auf eine derartige Welle 12 ergibt sich ein verhältnismäßig geringes, insbesondere axial zur Verfügung stehendes Einbauvolumen für eine im erfindungsgemäßen Sinne wirkende Einrichtung, die somit die notwendigen Voraussetzungen hinsichtlich eines äußerst geringen, vorzugsweise axialen Einbauvolumens (siehe hierzu insbesondere Verstaulage im Gehäuseabschnitt 3) erfüllt. Die zuvor genannte Welle 12 kann im übrigen mit einem in Fig. 2 und 3 schematisch angedeuteten, zentralen Kegelradgetriebe K in Verbindung stehen.

Bei ansonsten prinzipiell gleicher Bauweise verkörpert Fig. 3 eine Abwandlung gegenüber Fig. 2 dahingehend, daß die beiden Ringe 4',5' in der ineinandergeschobenen Ruhestellung mit ihren einen beiden Enden E1',E2' zusammen mit den daran angrenzenden Flächenabschnitten des zugehörigen Zwischengehäuses 3' ein örtlich abgestuftes Schrägprofil als Strömungsteiler ausbilden.

Voraussetzung für die Durchführung der Erfindung im Rahmen der Ausführungsbeispiele nach den Fig. 2 und 3 ist es ferner, daß die Ringe 4,5 bzw. 4',5' gleichzeitig mit unterschiedlichen Verstellgeschwindigkeiten angetrieben werden müssen.

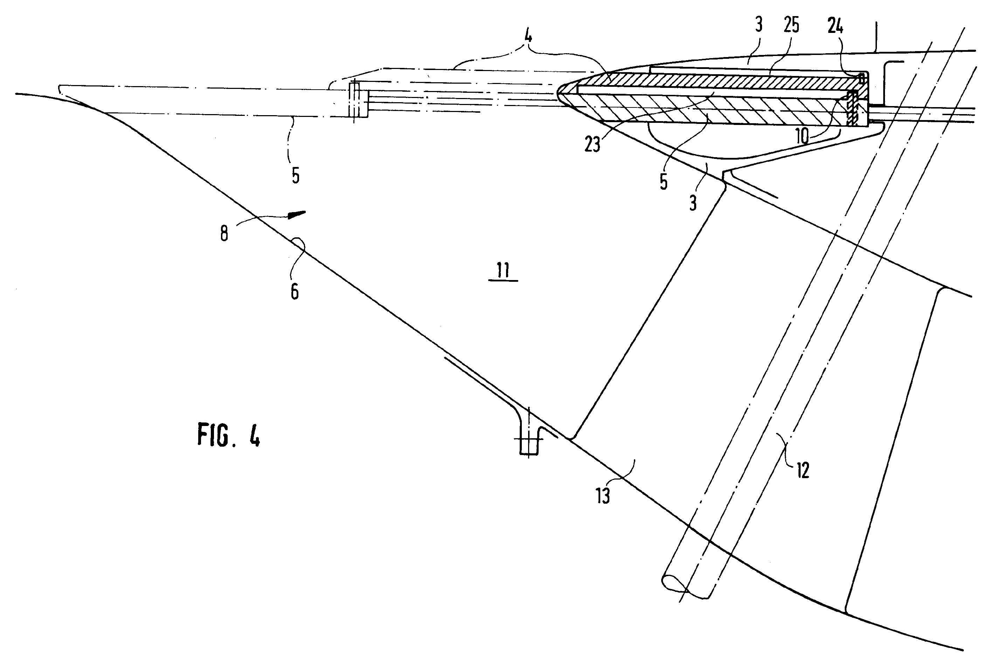

Gegenüber den Ausführungsbeispielen nach Fig. 2 und 3 stellt Fig. 4 insbesondere eine weitere grundsätzliche Abwandlung der Einrichtung dadurch dar, daß der in Bezug auf den äußeren Sekundärkanal 2 radial innere Ring 5, der bei der Axialverstellung den weitesten Ausfahrweg zurücklegen muß, ausschließlich einer Antriebsverstellung unterworfen ist und daß dieser radial innere Ring 5 den übrigen äußeren Ring 4 im Wege einer Nut-Federverbindung bzw. im Wege einer Nut-Stiftverbindung 23,10 einer Mitschleppbewegung unterzieht.

Im übrigen geht aus den Fig. 2, 3 und 4 deutlich hervor, daß das abgeschrägte Ende der Kanalwand 6 ein Bestandteil der dortigen Kanalverzweigung 8 ist, die einen von oben außen nach innen unten in Richtung auf die Triebwerksachse zum Sekundärkanalverlauf geneigten, ringförmigen Luftzuströmkanal 11 des Hochdruckverdichters 9 des Grundtriebwerks ausbildet.

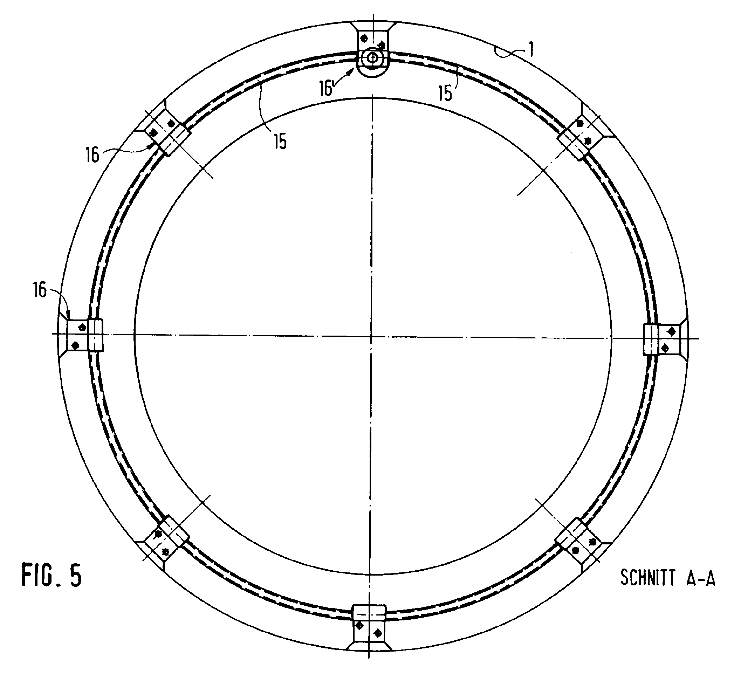

Gemäß Fig. 5 kann die Verstellkraft für einen Ring, z. B. 5 (Fig. 4) oder beispielsweise für beide Ringe 4,5 nach Fig. 2 in Bezug auf den Gesamtumfang eines Triebwerksgehäuseabschnitts (hier innenseitig an der inneren Kanalwand 1 des Sekundärkanals 2) von einer Stelle aus mittels einer biegsamen Welle 15, bzw. Sektionen derselben, auf mehrere gleichförmig über dem dortigen Gehäuseumfang verteilt angeordnete Verstellgetriebe 16 bzw. 16' übertragen werden. Über die genannten Stellgetriebe 16 bzw. 16' können darin drehbar gelagerte Muttern 17,18 von Kugelrollspindeln 19,20 angetrieben werden, die über Zug-Druckstangen 21 bzw. 22 (Fig. 2 und 3) an die hier jeweils beiden Ringe 4,5 bzw. 4',5' jeweils gesondert angreifen sollen. Durch eine unterschiedliche Steigung der betreffenden Spindeln 19 bzw. 20 kann den Ringen eine unterschiedliche axial gewünschte Verstellgeschwindigkeit aufgeprägt werden.

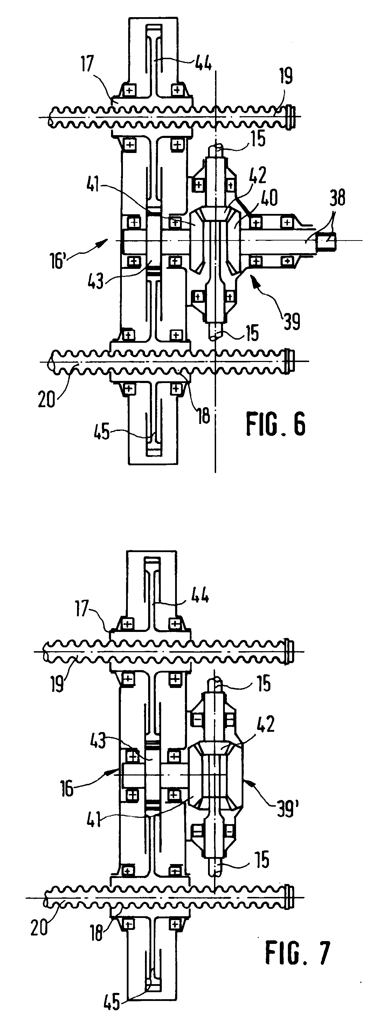

Fig. 6 verkörpert deutlichere Einzelheiten eines schematisch wiedergegebenen Stellgetriebes 16', und zwar desjenigen Stellgetriebes, welches in Kombination mit einem die Antriebsleistung (Welle 38) einführenden und verteilenden Vorsatzgetriebe 39 ausgerüstet ist. Gemäß Fig. 6 überträgt also die motorisch angetriebene Welle 38 die Gesamtantriebsleistung über kegeltellerartige Zahnräder 40,41,42 einerseits auf ein zentral im Stellgetriebe 16' gelagertes Zahnrad 43, welches beidseitig mit Zahnrädern 44 und 45 im Eingriff ist, die auf den betreffenden Muttern 17 bzw. 18 der Kugelrollspindeln 19 bzw. 20 sitzen und letztere verstellen. Die zuvor genannten äußeren Zahnräder 44 und 45 sind über die Muttern 17 bzw. 18 jeweils für sich gesondert in parallelen gegenseitigen Abständen am Gehäuse des Stellgetriebes 16' in Umfangsrichtung verdrehbar gelagert. Über das zuvor schon erwähnte Vorsatzgetriebe 39 bzw. zentrale Vorsatzgetriebe, erfolgt eine beidseitig in Umfangsrichtung erfolgende Leistungsaufteilung bzw. ein Antrieb über die biegsamen Wellen 15 auf jeweils zwei weitere benachbarte Stellgetriebe 16 (siehe auch Fig. 7).

Gegenüber der Konfiguration des Stellgetriebes 16' nach Fig. 6 unterscheiden sich sämtliche übrigen Stellgetriebe 16 beispielsweise nach Fig. 7 dadurch, daß ein im Bauumfang reduziertes Getriebvorsatzteil 39' vorgesehen ist. Mit diesem Vorsatzteil 39' erfolgt lediglich eine umfangsseitige Leistungsübertragung auf die einzelnen Getriebe 16, indem die über das zuvor in Fig. 6 besprochene Verstellgetriebe 16' eingegebene Hauptantriebsleistung über die entsprechend umfangsseitig angrenzenden Abschnitte der biegsamen Welle 15 und über die zu Fig. 6 relevante Zahnradpaarung 41,42 auf das zentrale Zahnrad 43 und so fort, weiter übertragen wird.

Aus den Fig. 2 und 3 ist ferner deutlich erkennbar, daß das zuvor in Fig. 6 schon deutlicher besprochene und erläuterte eine Stellgetriebe 16' wie aber auch die übrigen Stellgetriebe 16, in denen die Kugelrollspindeln 19,20 jeweils etwa parallel zur Triebwerksachse sich erstreckend gelagert sind, vorzugsweise an einem zur Innenwand 1 des Sekundärkanals 2 gehörenden Gehäuseabschnitt des Triebwerks angeordnet sind.

Ferner geht aus den Fig. 2 und 3 hervor, daß Antrieb und Verstellmittel der beiden Ringe 4,5 bzw. 4',5' innerhalb eines Ringraums R, zwischen dem äußeren Sekundärkanal 2 und dem Grundtriebwerk, hier insbesondere dem Hochdruckverdichter 9 des Grundtriebwerkes, angeordnet sind.

In detaillierterer Besprechung der Fig. 4 wäre noch zu vermerken, daß bei dieser Ausführung in den radial äußeren Ring 4 auf dessen einer Seite sowie an dessen stromauf- und stromabwärtiger Seite endende axiale Führungsnuten 23 eingelassen sind, in die am stromabwärtigen Ende des radial inneren Ringes 5 befindliche Federn oder hier Stifte 10 für das Ausfahren oder Verriegeln des übrigen Ringes 4 zwecks gemeinsamer Ruhestellung beweglich eingreifen.

Ferner kann gemäß Fig. 4 der übrige Ring 4 auf der vom radial inneren Ring 5 abgewandten Seite mit Federn oder, wie hier dargestellt, mit Stiften 20 in die axiale Ausfahrlänge begrenzenden Führungsnuten 25 des als Strömungsteiler ausgebildeten Zwischengehäuses 3 beweglich verfahrbar angeordnet sein.

Insbesondere im Hinblick auf das Triebwerkskonzept nach Fig. 1 wäre zu erwähnen, daß die zuvor besprochene, aus Ringen gebildete Absperreinrichtung in Kombination mit einem axsymetrisch dem Grundtriebwerk nachgeschalteten, axial verfahrbaren, pilzförmigen Schieber 26 vorgesehen sein kann; der genannte Schieber 26 kann beim ausschließlichen Staustrahlbetrieb eine ringförmige Düsenaustrittsöffnung 27 des Grundtriebwerks gegenüber der dabei stromab des Schiebers aus dem

Sekundärkanal 2 zufließenden Stauluftströmung absperren. Die genannte Absperrstellung ist dabei strichpunktiert angedeutet, während die volle Öffnungsstellung der dabei gegenüber dem Schieber 26 ausgebildeten Düsenöffnung durch die mit ausgezogenen Linien verkörperte Schieberstellung verdeutlicht ist. Der genannte Schieber 26 weist im wesentlichen eine in Strömungsrichtung zunehmende und dann kegelförmig wieder abnehmende Kontur auf, die im weitesten Sinn auch als Tropenform bezeichnet werden könnte. Dabei kann ein zentraler Antrieb für diesen Schieber 26 vorgesehen sein, wobei Kegelradgetriebe eine zentrale, mit einem Gewinde versehene Längsschraube antreiben auf der wiederum Muttern sitzen, die als Folge der Drehbewegung der Längsschraube axial hin und her verfahrbar sind und die mit örtlichen Verstrebungen axial verstellbar an den Schieber 26 innenseitig angreifen. Dabei wäre im übrigen zweckmäßigerweise die Absperrung des Zuströmquerschnittes Z über die betreffenden Ringe, z. B. 4,5, mit der Verstellung des zuvor genannten Schiebers 26 synchron aufeinander abzustimmen, um im gleichen Zeittakt eine front- und heckseitige kontinuierliche Absperrung des Grundtriebwerkes zu ermöglichen.

Im Hinblick auf die Eingangs genannten und bei Staustrahlbetrieb auftretenden verhältnismäßig hohen Temperaturbelastungen (bis etwa 1.700 °C) ist es erfindungsgemäß ferner vorgesehen, daß die Ringe 4,5 bzw. 4',5' in der Absperrstellung und bei auf Staustrahlbetrieb umgeschaltetem Triebwerk mittels am Triebwerkseinlauf entnommene Luft geeigneten Druckes gekühlt werden können, vorzugsweise im Sinne einer Filmkühlung. Die dabei erforderliche Kühltemperatur der Entnahmeluft kann im Wege eines Wärmetauschprozesses dieser Entnahmeluft mit dem mitgeführten Brennstoff, z. B. Wasserstoff, gewonnen werden. Die zuvor genannte Kühlfilmausbildung entlang der beiden voll ausgefahrenen Ringe 4,5 ist in Fig. 1, beispielsweise unten, durch die Pfeile F verkörpert. Da im Staustrahlbetrieb die Schaufeln 28,29 und 30 des Gebläses 7 ebenfalls gekühlt werden müssen, wäre es vorstellbar, daß z. B. ein Teil der Kühlluft, welche zur Kühlung der letzten Reihe von Laufschaufeln 30 des Gebläses 7 verwendet wird, aus den dortigen Schaufeln innenseitig abgeblasen und gegen die betreffenden Ringe 4,5 der Absperreinrichtung ausgeblasen wird.

## Patentansprüche

1. Gebläse-Staustrahltriebwerk für Unterschall-, Überschall- und Hyperschall-Flugbetrieb, mit von einem zentralen Grundtriebwerk angetriebenem Frontverdichter oder -gebläse (1), einem sich an das Gebläse (1) anschließenden Sekundärkanal (2), der das Grundtriebwerk ringförmig ummantelt und mit einer in axialer Richtung verfahrbaren ringschieberartigen Absperreinrichtung, die eine ringförmige Zuströmfläche (Z) bei abgeschaltetem Staustrahlantrieb und ausschließlicher Förderung des Gebläses (1) in den Sekundärkanal (2) und in das Grundtriebwerk freilegt oder -im Stillstand des Grundtriebwerks nebst Gebläses (1) und dabei eingeschaltetem Staustrahlantrieb - so absperrt, daß zugeführte Staudruckluft ausschließlich in den Sekundärkanal (2) gelangt, wobei die Zuströmfläche (Z) zwischen der unterbrochenen Innenwand (1) des Sekundärkanals (2) und einer Kanalabzweigung (8) zum Grundtriebwerk angeordnet ist und an der Abzweigung, zwischen dem vorderen Stirnende eines Zwischengehäuses (3) und dem äußeren Ende einer Kanalwand (6), in einer stromaufwärtigen Bewegungsrichtung abgesperrt wird, dadurch gekennzeichnet, daß die Absperreinrichtung aus Ringen (4,5) besteht,

-die in einer Stellung, in der sie die Zuströmfläche (Z) freigeben, in dem als Strömungsteiler ausgebildeten Zwischengehäuse (3) ineinandergeschoben sind und dabei mit ihrem einen Enden (E1,E2) und, zusammen, mit an die Enden angrenzenden Flächenabschnitten des Zwischengehäuses (3) eine aerodynamisch optimiert verschlossene Nasenkante des Strömungsteilers ausbilden,
-die zum Absperren der Zuströmfläche (Z), unter gegenseitiger Flächenkontaktierung, unterschiedlich weit axial aus dem zwichengehäuse ausgefahren sind,
-von denen der jeweils in der Absperrstellung der Zuströmfläche (Z) am weitesten ausgefahrene und innen liegende Ring (5) mit einer abgeschrägten Endfläche an seinem einen Ende (E2) gegen das korrespondierend abgeschägte äußere Ende der Kanalwand (6) verfahren ist.

2. Triebwerk mit Absperreinrichtung nach Anspruch 1, dadurch gekennzeichnet, daß das abgeschrägte äußere Ende der Kanalwand (6) Bestandteil der Kanalabzweigung (8) ist, die sich als ein von vorn außen nach hinten innen in Richtung auf die Triebwerksachse zum Sekundärkanalverlauf geneigter, ringförmiger Luftzuströmkanal (11) in den Hochdruckverdichter (9) des Grundtriebwerkes fortsetzt.

3. Triebwerk mit Absperreinrichtung nach Anspruch 1 oder 2, dadurch gekennzeichnet, daß es eine dem Grundtriebwerk nachgeschaltete Staustrahlbrennkammer aufweist, die bei von den Ringen (4,5 bzw. 4',5') abgesperrter Zuströmfläche (Z) im Staustrahlbetrieb über den Sekundärkanal (2) mit Staudruckluft beaufschlagt ist.

4. Triebwerk mit Absperreinrichtung nach einem oder mehreren der Ansprüche 1 bis 3, dadurch gekennzeichnet, daß die Ringe (4,5 bzw. 4',5') gleichzeitig mit unterschiedlichen Verstellgeschwindigkeiten angetrieben sind.

5. Triebwerk mit Absperreinrichtung nach einem oder mehreren der Ansprüche 1 bis 4, dadurch gekennzeichnet, daß jeweils einer von zwei Ringen, vorzugsweise der in Bezug auf den Sekundärkanal (2) radial am weitesten innen liegende Ring (5), für die Axialverstellung angetrieben ist, durch welchen der übrige Ring (4) über eine Nut-Feder- bzw. Nut-Stift-Verbindung (23,10) einer Mitschleppbewegung unterworfen ist.

6. Triebwerk mit Absperreinrichtung nach Anspruch 4 oder 5, dadurch gekennzeichnet, daß die Ringverstellkraft in Bezug auf den Gesamtumfang eines Triebwerkgehäuseabschnitts, von einer Stelle aus mittels einer biegsamen Welle (15) auf mehrere gleichförmig über dem Umfang verteilt angeordnete Verstellgetriebe (16,16') übertragen wird, mit denen darin drehbar gelagerte Muttern (17,18) von Kugelrollspindeln (19,20) angetrieben werden, die über Zug-Druckstangen (21 bzw. 22) an den einen bzw. die Ringe (4,5 bzw. 4',5') gesondert angreifen.

7. Triebwerk mit Absperreinrichtung nach einem oder mehreren der Ansprüche 1 bis 6, dadurch gekennzeichnet, daß Antrieb und Verstellmittel für zumindest einen Ring (5 bzw. 5') innerhalb eines Ringraumes (R), zwischen dem äußeren Sekundärkanal (2) und dem Grundtriebwerk, angeordnet sind.

8. Triebwerk mit Absperreinrichtung nach Anspruch 6 oder 7, dadurch gekennzeichnet, daß die Stellgetriebe (16 bzw. 16'), in denen die Kugelrollspindeln (19,20) jeweils etwa parallel zur Triebwerksachse sich erstreckend gelagert sind, an einem zur Innenwand (1) des Sekundärkanals (2) gehörenden Gehäuseabschnitt des Triebwerks angeordnet sind.

9. Triebwerk mit Absperreinrichtung nach Anspruch 5, dadurch gekennzeichnet, daß in einen übrigen bzw. radial äußeren Ring (4) auf der einen Seite an dessen stromauf- und stromabwärtiger Seite endende, axiale Führungsnuten (23) eingelassen sind, in die am stromabwärtigen Ende eines radial inneren Rings (5) befindliche Federn oder Stifte (10) für das Ausfahren oder Verriegeln des übrigen Ringes (4) in der Ruhestellung, beweglich eingreifen.

10. Triebwerk mit Absperreinrichtung nach Anspruch 9, dadurch gekennzeichnet, daß der übrige Ring (4) auf der vom radial inneren Ring (5) abgewandten Seite mit Federn oder Stiften (24) in die axiale Ausfahrlänge begrenzenden Führungsnuten (25) des als Strömungsteiler ausgebildeten Zwischengehäuses (3) beweglich verfahrbar angeordnet ist.

11. Triebwerk mit Absperreinrichtung nach einem oder mehreren der Ansprüche 1 bis 10, dadurch gekennzeichnet, daß sie in Kombination mit einem axialsymetrisch dem Grundtriebwerk nachgeschalteten, axial verfahrbaren, pilzförmigen Schieber (26) vorgesehen ist, der beim ausschließlichen Staustrahlbetrieb eine ringförmige Düsenaustrittsöffnung (27) des Grundtriebwerkes gegenüber der dabei stromab des Schiebers (26) aus dem Sekundärkanal (2) zusammenfließenden Stauluftströmung absperrt.

12. Triebwerk mit Absperreinrichtung nach einem oder mehreren der Ansprüche 1 bis 14, dadurch gekennzeichnet, daß die Ringe (4,5) in der Absperrstellung und bei auf Staustrahlbetrieb umgeschaltetem Triebwerk mittels am Triebwerkseinlauf entnommener Luft geeigneten Druckes und Temperaturniveaus gekühlt sind, vorzugsweise kühlfilmartig, wobei die erforderliche Kühltemperatur der Entnahmeluft im Wege eines Wärmetauschprozesses der Entnahmeluft mit dem mitgeführten Brennstoff, z. B. Wasserstoff, gewonnen wird.

13. Triebwerk mit Absperreinrichtung nach einem oder mehreren der Ansprüche 1 bis 12, dadurch gekennzeichnet, daß mechanische Verstellmittel der Ringe (4, 5), insbesondere in der Ausbildung als Zug-Druckstangen (21 bzw. 22),unter örtlicher Abdichtung durch den betreffenden Wandabschnitt des Zwischengehäuses (3) hindurchgeführt sind.

**Claims**

1. Fanjet/ramjet engine for subsonic, supersonic and hypersonic flight, with a front compressor or fan (1) driven by a central primary power plant, a secondary channel (2) connected to the fan (1), which channel surrounds the primary power plant in an annular fashion, and with an axially displaceable sleeve valve-like flow control device, which exposes an annular inflow area (Z) with the ramjet drive switched off and with a supply solely from the fan (1) into the secondary channel (2) and into the primary power plant or, when the primary power plant is inoperative together with the fan (1), and with the ram jet drive switched on, shuts it off in that arriving ram air flows exclusively into the secondary channel (2), wherein the inflow area (Z) is arranged between the interrupted inner wall (1) of the secondary channel (2) and a channel branch (8) to the primary power plant and is blocked when being displaced in an upstream direction at the branch, between the front leading edge of an intermediate housing (3) and the outer end of a channel wall (6), characterized in that the flow control device consists of rings (4,5),

-which, in one position when exposing the inflow area (Z), are inserted into one another in the intermediate housing (3) executed as a flow divider and form an aerodynamically optimized closed leading edge of the flow divider with their one ends (E1,E2) together with sections of the surface of the intermediate housing (3) adjacent to the ends,

-which, for the purpose of shutting off the inflow area (Z), are displaced axially for different distances from the intermediate housing whilst maintaining surface contact with one another,

-of which in each case that ring (5) being displaced furthest in the shut-off position of the inflow area (Z) and respectively being positioned furthest inwardly, is moved with a chamfered end surface at one of its ends (E2) towards the corresponding chamfered outer end of the channel wall (6).

2. Engine with a flow control device in accordance with Claim 1, characterized in that the chamfered outer end of the channel wall (6) is a component part of the channel branch (8), which continues into the high-pressure compressor (9) of the primary power plant in the direction of the engine shaft in the form of an annular air inlet channel (11) inclined at an angle to the path of the secondary channel from the outside at the front to the inside at the rear.

3. Engine with a flow control device in accordance with Claims 1 or 2, characterized in that it exhibits a ramjet combustion chamber positioned after the primary power plant, which, with the inflow area (Z) shut off by the rings (4,5 and 4',5'), is charged with ram air in the ramjet mode via the secondary channel (2).

4. Engine with a flow control device in accordance with one or more of the Claims 1 to 3, characterized in that the rings (4,5 and 4',5') are driven at the same time at different rates of displacement.

5. Engine with a flow control device in accordance with one or more of the Claims 1 to 4, characterized in that in each case one of two rings, preferably the ring (5) situated furthest inwards in a radial sense in relation to the secondary channel (2), is driven for the purpose of its axial displacement, by which the remaining ring (4) is subjected to coupled motion via a key-and-slot or peg-and-slot connection (23,10).

6. Engine with a flow control device in accordance with Claims 4 or 5, characterized in that the ring displacement force is transmitted from a single point in relation to the total periphery of a section of an engine housing by means of a flexible shaft (15) to several adjusting mechanisms (16,16') arranged uniformly around the periphery, by which means nuts (17,18) pivotally mounted therein are driven by ball roller spindles (19,20) which engage separately with the one or more rings (4,5 and 4',5') via compression-tension rods (21 and 22).

7. Engine with a flow control device in accordance with one or more of the Claims 1 to 6, characterized in that the drive and displacement means for at least one ring (5 and 5') are arranged within a ring space (R) between the outer secondary channel (2) and the primary power plant.

8. Engine with a flow control device in accordance with Claims 6 or 7, characterized in that the adjusting mechanisms (16 and 16'), in which the ball roller spindles (19,20) are supported in each case so that they extend more or less parallel with the shaft of the engine, are arranged on a section of the housing belonging to the inner wall (1) of the secondary channel (2).

9. Engine with a flow control device in accordance with Claim 5, characterized in that axial guide slots (23) are let into one side of a further radially outer ring (4) ending on its upstream and downstream sides, in which slots keys or pegs (10) on the lower end of a radially inner ring (5) engage in a movable fashion for the purpose of extending or locking the further ring (4) in the rest position.

10. Engine with a flow control device in accordance with Claim 9, characterized in that the further ring (4) is arranged, on the side facing away from the radially inner ring (5), with keys or pegs (24) capable of movement in the direction of axial extension of adjacent guide slots (25) in the intermediate housing (3) executed as a flow divider.

11. Engine with a flow control device in accordance with one or more of the Claims 1 to 10, characterized in that it is provided in combination with a mushroom-shaped slide (26) positioned after the primary power plant in an axially symmetrical fashion and capable of axial displacement, which slide, when operating exclusively in ramjet mode, shuts off an annular jet outlet opening (27) of the primary power plant from the ram-air flow flowing together from the secondary channel (2) downstream of the slide (26).

12. Engine with a flow control device in accordance with one or more of the Claims 1 to 14, characterized in that the rings (4,5), when in the shut-off position, and with the engine switched to ramjet mode, are cooled by means of air at an appropriate pressure and temperature level taken from the engine inlet, preferably in the form of a cooling film, in conjunction with which the necessary cooling temperature of the extracted air is achieved by means of a heat exchange process of the extracted air with the fuel, such as hydrogen, carried with it.

13. Engine with a flow control device in accordance with one or more of the Claims 1 to 12, characterized in that mechanical displacement devices for the rings (4, 5), especially in the execution as compression-tension rods (21 and 22), pass through the wall section concerned of the intermediate housing (3) with local sealing.

**Revendications**

1. Turbo-statoréacteur pour le fonctionnement en vol subsonique, supersonique et hypersonique, avec un compresseur frontal ou une soufflante frontale (1) entraîné par un propulseur central de base, avec un canal secondaire (2) se raccordant à la soufflante (1), et qui entoure annulairement le propulseur de base, et avec un dispositif de fermeture du type à tiroir annulaire susceptible d'être déplacé en direction axiale, qui libère une surface d'arrivée annulaire (Z) lorsque la propulsion par statoréacteur est arrêtée et que la soufflante (1) refoule exclusivement dans le canal secondaire (2) et dans le propulseur de base, ou bien qui ferme cette surface lorsque le propulseur de base et la soufflante (1) sont à l'arrêt et qu'alors la propulsion par statoréacteur est en service, de façon que l'air amené à la pression dynamique arrive exclusivement dans le canal secondaire (2), tandis que la surface d'arrivée (Z) est disposée entre la paroi interne interrompue (1) du canal secondaire (2) et une bifurcation du canal (8) vers le propulseur de base, et est fermé, dans un sens de déplacement en amont de l'écoulement, entre l'extrémité frontale antérieure d'un carter intermédiaire (3) et l'extrémité externe d'une paroi (6) du canal, turbo-statoréacteur caractérisé en ce que le dispositif de fermeture est constitué par des anneaux (4, 5),

- en ce que ces anneaux, dans une position dans laquelle ils libèrent la surface d'arrivée (Z) sont enfilés l'un dans l'autre dans le carter intermédiaire (3) revêtant la forme d'un diviseur d'écoulement, et constituent alors avec l'une (E1, E2) de leurs extrémités et conjointement avec les parties de surfaces du carter intermédiaire (3) contiguës à ces extrémités, une arête fermée aérodynamiquement de façon optimale du diviseur d'écoulement,

- en ce que ces anneaux pour fermer la surface d'arrivée (Z) par mise en contact réciproque des surfaces, sont déployés axialement hors du carter intermédiaire à des distances différentes,

- en ce que l'anneau (5) placé à l'intérieur et déployé le plus loin dans la position de fermeture de la surface d'arrivée (Z) est amené avec une surface terminale chanfreinée à l'une (E2) de ces extrémités contre l'extrémité externe chanfreinée de façon correspondante de la paroi (6) du canal.

2. Turbo-statoréacteur avec dispositif de fermeture selon la revendication 1, caractérisé en ce que l'extrémité extérieure chanfreinée de la paroi (6) du canal fait partie de la bifurcation (8) du canal qui sous la forme d'un canal annulaire d'arrivée d'air (11) incliné par rapport au tracé du canal secondaire de l'avant et de l'extérieur vers l'arrière et vers le bas en direction de l'axe du propulseur, se continue dans le compresseur haute pression (9) du propulseur de base.

3. Turbo-statoréacteur avec dispositif de fermeture selon la revendication 1 ou la revendication 2, caractérisé en ce qu'il comporte une chambre de combustion de statoréacteur branchée à la suite du propulseur de base, et qui est alimentée avec de l'air sous pression dynamique par l'intermédiaire du canal secondaire (2) en fonctionnement de statoréacteur lorsque la surface d'arrivée (Z) est fermée par les anneaux (4, 5 ou bien 4', 5').

4. Turbo-statoréacteur avec dispositif de fermeture selon une ou plusieurs des revendications 1 à 3, caractérisé en ce que les anneaux (4, 5 ou bien 4', 5') sont entraînés simultanément avec des vitesses de déplacement différentes.

**5.** Turbo-statoréacteur avec dispositif de fermeture selon une ou plusieurs des revendications 1 à 4, caractérisé en ce que respectivement un des deux anneaux, de préférence l'anneau (5) placé le plus loin radialement à l'intérieur par rapport au canal secondaire (2), est entraîné pour le déplacement axial, grâce à quoi l'autre anneau (4) est soumis à un mouvement d'entraînement par l'intermédiaire d'une liaison gorge-clavette ou bien gorge-broche (23, 10).

**6.** Turbo-statoréacteur avec dispositif de fermeture selon la revendication 4 ou la revendication 5, caractérisé en ce que l'effort de déplacement des anneaux, en ce qui concerne la périphérie totale d'un tronçon du carter du propulseur, est transmis à partir d'un emplacement au moyen d'un arbre flexible (15) à plusieurs mécanismes de déplacement (16, 16′) répartis uniformément sur la périphérie, grâce auxquels des écrous (17, 18) montés de façon à pouvoir tourner dans ces mécanismes, entraînent des broches filetées à billes (19, 20), qui, par l'intermédiaire de tiges de traction et de poussée (21 ou bien 22) agissent séparément sur l'un des anneaux (4, 5 ou 4′, 5′) ou bien sur les deux.

**7.** Turbo-statoréacteur avec dispositif de fermeture selon une ou plusieurs des revendications 1 à 6, caractérisé en ce que des moyens d'entraînement et de déplacement pour au moins un anneau (5 ou bien 5′) sont disposés à l'intérieur d'un espace annulaire (R) entre le canal secondaire externe (2) et le propulseur de base.

**8.** Turbo-statoréacteur avec dispositif de fermeture selon la revendication 6 ou la revendication 7, caractérisé en ce les mécanismes de commande (16 ou bien 16′) dans lesquels sont montées les broches filetées à billes (19, 20) s'étendant respectivement à peu près parallèlement à l'axe du propulseur, sont disposés contre une partie du carter du propulseur appartenant à la paroi interne (1) du canal secondaire (2).

**9.** Turbo-statoréacteur avec dispositif de fermeture selon la revendication 5, caractérisé en ce que, sur un autre anneau ou anneau radial externe (4) sont ménagées, sur un de ses côtés, des gorges de guidage axiales (23) se terminant à la face amont et à la face aval de cet anneau, et dans lesquelles des clavettes ou des broches (10) se trouvant à l'extrémité aval d'un anneau radial interne (5), viennent en prise pour le déploiement ou le verrouillage de cet autre anneau (4) dans la position de repos.

**10.** Turbo-statoréacteur avec dispositif de fermeture selon la revendication 9, caractérisé en ce que l'autre anneau (4) est muni sur son côté opposé à l'anneau radial interne (5) de clavettes ou de broches (24) susceptibles de se déplacer dans les gorges de guidage (25), limitant la longueur axiale de déploiement des anneaux, du carter intermédiaire (3) revêtant la forme d'un diviseur d'écoulement.

**11.** Turbo-statoréacteur avec dispositif de fermeture selon une ou plusieurs des revendications 1 à 10, caractérisé en ce que ce dispositif est prévu en combinaison avec un coulisseau (26) en forme de champignon susceptible d'être déplacé axialement et monté axial-symétriquement à la suite du propulseur de base, et qui, lors du fonctionnement exclusif en statoréacteur, ferme une ouverture annulaire de sortie de buse (27) du propulseur de base par rapport à l'écoulement convergeant alors en aval du tiroir (26) à partir du canal secondaire (2).

**12.** Turbo-statoréacteur avec dispositif de fermeture selon une ou plusieurs des revendications 1 à 14, caractérisé en ce que les anneaux (4, 5) dans leur position de fermeture et lorsque le propulseur est commuté sur le fonctionnement en stato-réacteur, sont refroidis, de préférence par écoulement laminaire, par de l'air à une pression et à un niveau de température appropriés prélevé à l'entrée du propulseur, auquel cas la température de refroidissement nécessaire de l'air ainsi prélevé est obtenue au moyen d'un processus d'échange thermique de l'air prélevé avec le carburant amené, par exemple de l'hydrogène.

**13.** Turbo-statoréacteur avec dispositif de fermeture selon une ou plusieurs des revendications 1 à 12, caractérisé en ce que les moyens mécaniques de déplacement des anneaux (4, 5), notamment lorsqu'ils revêtent la forme de tiges de traction et de poussée (21 ou bien 22) passent à travers la partie de paroi concernée du carter intermédiaire (3) avec un étanchement local.

FIG.1

EP 0 392 401 B1

FIG. 2

EP 0 392 401 B1

FIG. 3

FIG. 4

SCHNITT A-A

FIG. 5

FIG. 6

FIG. 7